# EUROPÄISCHE PATENTSCHRIFT

(11) **EP 0 738 335 B1**
(45) Veröffentlichungstag und Bekanntmachung des Hinweises auf die Patenterteilung: **20.08.1997**
(21) Anmeldenummer: 95906312.4
(22) Anmeldetag: 07.01.1995
(51) Int. Cl.: C22C 32/00, F16D 69/02

(54) **SINTERREIBWERKSTOFF FÜR REIBSCHLÜSSIGE ELEMENTE SOWIE REIBSCHLÜSSIGES ELEMENT**
SINTERED FRICTION MATERIAL FOR FRICTION-LINKED COMPONENTS AND FRICTION-LINKED COMPONENT
MATERIAU DE FRICTION FRITTE POUR ELEMENTS A LIAISON PAR FRICTION, ELEMENTS AINSI REALISES

(30) Priorität: 10.01.1994 DE 4400431
(43) Veröffentlichungstag der Anmeldung: 23.10.1996
(73) Patentinhaber: SINTERMETALLWERK KREBSÖGE GMBH, 42477 Radevormwald (DE)
(72) Erfinder: GONIA, Detlev, D-42719 Solingen (DE); ECKHARDT, Marion, D-01728 Possendorf/Börnchen (DE); SCHNEIDER, Lothar, D-06140 Loswig (DE)
(74) Vertreter: Maxton, Alfred, Dipl.-Ing.
(86) Internationale Anmeldenummer: EP9500054
(87) Internationale Veröffentlichungsnummer: WO9518877

(56) Entgegenhaltungen:
- EP-A- 0 303 809
- WO-A-93/16207
- GB-A- 2 237 029
- US-A- 3 853 572
- US-A- 4 654 381
- METAL POWDER REPORT, Bd.48, Nr.6, Juni 1993, UK Seiten 30 - 33 ROMERO, O. 'Clutch Technology Moves into Gear Boxes'

## Beschreibung

Die Erfindung betrifft einen Sinterreibwerkstoff zum Herstellen reibschlüssiger Elemente, insbesondere Synchronringe, sowie ein reibschlüssiges Element mit einem Reibbelag aus diesem Sinterreibwerkstoff, insbesondere Synchronring. Im folgenden wird daher überwiegend von einem Synchronring gesprochen, ohne daß damit eine Beschränkung verbunden sein soll.

Synchronringe, beispielsweise in Kraftfahrzeug-Schaltgetrieben, unterliegen hohen Beanspruchungen und müssen einer Vielzahl von Anforderungen genügen. Für ausreichend kurze Schaltzeiten ist es erforderlich, daß der Reibbelag des Synchronringes ein gutes Reibverhalten aufweist. Weiterhin muß der Synchronring eine ausreichende mechanische und thermische Festigkeit aufweisen. Ferner ist es zweckmäßig, daß der Reibbelag einfach mechanisch zu bearbeiten ist, da die Reibfläche paßgenau hergestellt werden muß. Es ist offensichtlich, daß diese Anforderungen im allgemeinen nicht durch einen einzigen Werkstoff erfüllt werden können. Es ist daher bekannt, Synchronringe zweischichtig auszubilden, so daß die als Reibbelag dienende Materialschicht für günstige Reibbedingungen ausgelegt ist, während das als Träger dienende Material eine hohe mechanische und/oder thermische Festigkeit aufweist.

Aus der DD-PS 89 727 ist ein Reibelement, beispielsweise ein Synchronring, für Öllauf bekannt, das pulvermetallurgisch aus einem Eisenpulver hergestellt ist, dem pulverförmiges Nickel, Kupfer, Blei sowie Graphit zugesetzt wird. Die Verwendung von Blei kann sowohl bei der Herstellung als auch beim Gebrauch des Reibelementes eine erhebliche Gesundheitsgefährdung zur Folge haben. Außerdem hat sich herausgestellt, daß dieser Werkstoff wegen des vergleichsweise geringen Graphitgehaltes insbesondere bei hohen Belastungen zu starken Adhäsionserscheinungen neigt, die sich in einem ungleichförmigen Momentaufbau und Freßerscheinungen äußern.

Aus dem DE-GM 73 42 680 ist ein Synchronring aus Sinterstahl bekannt, der als Reibfläche eine dünne aufgespritzte Molybdänschicht aufweist. Zum einen ist Molybdän-Spritzmaterial ein teurer Werkstoff und zum anderen muß in der Regel der Synchronring durch Schleifen auf die geforderte Oberflächenmaße gebracht werden. Aufgrund der hohen Härte der Molybdänschicht ist dies grundsätzlich mit einem hohen Werkzeugverschleiß verbunden.

Aus der DE-OS 42 03 321 ist ein Sinterreibwerkstoff für reibschlüssige Elemente, insbesondere von Synchronringen, bekannt, der einen Graphitanteil von 15 - 30 Volumenprozent aufweist und der u. a. keramische Inhaltsstoffe enthält. Ein Synchronring mit einem derartigen Reibbelag weist zwar das gewünschte Reibverhalten auf, jedoch ist nicht auszuschließen, daß durch den Anteil an keramischen Inhaltsstoffen starke abrasive Verschleißscheinungen am Kupplungskörper auftreten. Dies kann ggf. ebenfalls zu einem ungleichmäßigen Momentaufbau führen.

Der Erfindung liegt die Aufgabe zugrunde, einen Sinterreibwerkstoff für reibschlüssige Elemente zu schaffen, der ein gutes Reibverhalten ohne die damit verbundenen Nachteile der eingangs geschilderten Art aufweist.

Die Aufgabe wird gemäß der Erfindung durch einen eine Matrix auf Eisenbasis und einen Festschmierstoff enthaltenden Sinterreibwerkstoff gelöst, der 0,5 - 10 Gewichtsprozent bezogen auf die Matrix Molybdän und 20 - 50 Volumenprozent Graphit als Festschmierstoff enthält. In einer Ausgestaltung der Erfindung kann der Molybdängehalt 1 bis 5 Gewichtsprozent betragen. Zweckmäßig kann es sein, wenn der Graphitgehalt 25 bis 45 Volumenprozent beträgt. Die Bestandteile können dabei die herstellungsbedingten und/oder nicht vermeidbaren Verunreinigungen aufweisen.

Es hat sich in überraschender Weise gezeigt, daß die Mischung eines in der Regel als Konstruktionswerkstoff verwendeten Sintermetallwerkstoffs mit einem hohen Anteil an Festschmierstoff zum einen die gewünschten Reibeigenschaften aufweist. Zum anderen werden aufgrund des hohen Festschmierstoffgehaltes Ahäsionserscheinungen und abrasive Beanspruchungen der Reibfläche des Kupplungskörpers auch bei starker Belastung oder Überlastung weitgehend vermieden. Als weiterer Vorteil hat sich herausgestellt, daß der Sinterreibwerkstoff gemäß der Erfindung eine hohe Formbarkeit besitzt. Es ist daher möglich, daß bei der Herstellung des Synchronringes mittels pulvermetallurgischer Verfahren der Ring nach dem Sintervorgang kalibriert werden kann, wodurch die sich ggf. anschließende spanende Bearbeitung zur Herstellung einer paßgenauen Reibfläche reduziert werden kann.

In einer zweckmäßigen Ausgestaltung der Erfindung ist vorgesehen, daß die Matrix zumindest teilweise aus einem mit Molybdän fertiglegierten Eisenpulver besteht. In einer anderen Ausgestaltung der Erfindung kann vorgesehen werden, daß die Matrix zumindest teilweise aus einem mit Molybdän anlegierten Eisenpulver besteht. Beide Ausführungsformen haben den Vorteil, daß zur Bereitstellung des zu verarbeitenden Sintermetallpulvers Molybdän nicht in freier Form zugegeben werden muß, wodurch sich die Handhabbarkeit des Matrixpulvers wesentlich vereinfacht.

Die Erfindung betrifft ferner ein reibschlüssiges Element, insbesondere einen Synchronring, mit einem Träger und einem Reibbelag aus einem Sinterreibwerkstoff der eingangs geschilderten Art. Synchronringe werden in der Regel in mit Öl geschmierten Getrieben verwendet. Es ist daher unvermeidbar, daß die Gegenlauffläche des Kupplungskörpers einerseits und die Reibbelagfläche des Synchronringes andererseits vor dem Schaltvorgang mit Öl benetzt sind. Es ist daher bekannt, daß die Reibfläche der Synchronringe mit Nuten versehen werden, so daß das Öl abgeführt werden kann. Die Fertigung derartiger Nuten ist in Abhängigkeit von dem Material der Reibbelagschicht mit hohem Aufwand verbunden.

Es ist bekannt, beispielsweise Messing-Synchronringe mit umlaufenden Nuten zu versehen. Derartige Nuten können grundsätzlich nur spanend hergestellt werden, was bei Messingringen ohne weiteres möglich ist. Bei Synchronringen die auf pulvermetallurgischem Wege hergestellt sind, ist es zweckmäßig, axial verlaufende Nuten vorzusehen. Dies ist insbesondere dehalb günstig, da die Axialnuten unmittelbar beim Preßvorgang eingeformt werden können. Es ist jedoch im allgemeinen erforderlich, daß die wirksame Reibfläche spanend nachgearbeitet wird. Das Vorsehen von axial verlaufenden oder umlaufenden Nuten war bislang bei molydänhaltigen Reibbelagschichten nur sehr schwer durchführbar, da zum einen die spanende Bearbeitung, insbesondere die Herstellung von umlaufenden Nuten, derartiger Reibbeläge mit zu hohem Aufwand verbunden ist. Axial verlaufende Nuten können zwar grundsätzlich beim Preßvorgang eingearbeitet und die Reibfläche einschließlich der Nutflächen mit einer Molybdän-spritzschicht versehen werden, jedoch ist auch hier die erforderliche spanende Nacharbeitung mit erhöhtem Aufwand verbunden.

Es hat sich jedoch gezeigt, daß der Sinterreibwerkstoff gemäß der Erfindung trotz des hohen Molybdängehaltes nach dem Sintervorgang mit ausreichender Genauigkeit kalibriert werden kann. Es kann daher gemäß der Erfindung vorgesehen werden, daß auf der Reibfläche des reibschlüssigen Elementes mit einem Reibbelag gemäß der Erfindung axial ausgerichtete Nuten angeordnet sind, die beim Preßvorgang eingeformt werden können. In einer Ausgestaltung der Erfindung ist vorgesehen, daß die Nuten auf der Reibfläche trapezförmig ausgebildet sind. Trapezförmige Nuten können beim Preßvorgang des pulvermetallurgischen Verfahrens ebenfalls ohne weiteres eingeformt werden. Die trapezförmig ausgebildeten Nuten haben den Vorteil, daß das Öl von den jeweiligen Oberflächen besser abgeführt wird.

Das reibschlüssige Element gemäß der Erfindung ist zweckmäßigerweise ebenfalls als mehrschichtiges Bauteils ausgebildet, wobei der Träger für den Reibbelag aus Sinterstahl bestehen kann. Dies hat den Vorteil, daß der vergleichsweise teure Reibbelag nur in einer dünnen Schicht auf dem Synchronring vorhanden sein muß. Die Herstellung eines derartigen mehrschichtigen Synchronringes erfolgt beispielsweise durch Verbundverfahren.

Die Erfindung wird nun anhand der Beispiele und der dazugehörigen Diagramme sowie der Zeichnung näher erläutert. Es zeigen:
- Fig. 1: die Abhängigkeit des Reibwertes µ von der Schaltzeit mit einem Reibbelag gemäß Beispiel 1 der Erfindung,
- Fig. 2: die Abhängigkeit des Reibwertes µ von der Schaltzeit mit einem Reibbelag gemäß Beispiel 2 der Erfindung,
- Fig. 3: im Schnitt einen Synchronring und
- Fig. 4: die Ansicht in Richtung des Pfeiles IV gemäß Fig. 3.

### Beispiel 1:

Es wurde ein Sinterreibbelag mit folgenden Bestandteilen hergestellt:

| | |
|---|---|
| Matrix | 60 Volumenprozent |
| Graphit | 40 Volumenprozent |
| Molybdän | 1,5 Gewichtsprozent bezogen auf die Matrix. |

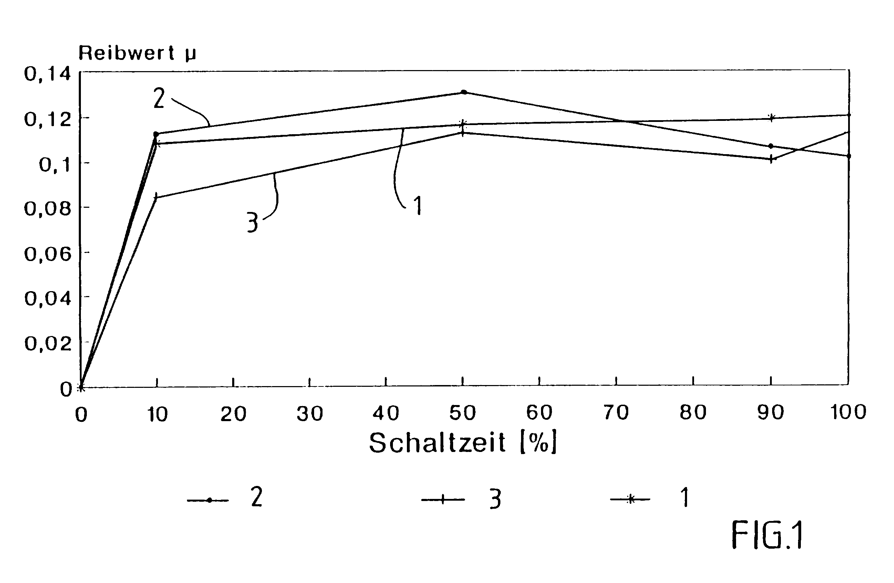

Die in Fig. 1 dargestellte Messung erfolgte bei einer Flächenpressung von 4 N/mm² und einer Reibgeschwindigkeit von 5 m/s. Der Reibwertverlauf des Reibbelages mit dieser Zusammensetzung ist in dem Diagramm mit dem Bezugszeichen 1 bezeichnet. Zum Vergleich sind der Reibwertverlauf 2 eines Synchronringes, der als Reibbelag eine mit umlaufenden Nuten versehene Molybdän-Spritzschicht aufweist, und der Reibwertverlauf 3 eines Synchronringes dargestellt, dessen Reibbelag auf einer phosphor-legierten Eisenmatrix besteht, die 20 Volumenprozent Graphit und 10 Volumenprozent Keramikbestandteile aufweist. Wie aus dem Diagramm ersichtlich, ist der Reibwertverlauf 1 mit dem Reibwertverlauf 2 (Molybdän-Spritzschicht), der als günstiger Reibwertverlauf gilt, vergleichbar. Der Reibwerkstoff gemäß Beispiel 1 ist jedoch wesentlich einfacher zu handhaben und es besteht aufgrund des hohen Graphitgehaltes keine Gefahr von Adhäsionserscheinungen und/ oder eines abrasiven Verschleisses des Kupplungskörpers bei hoher Belastung. Der Synchronring mit einem Reibbelag mit keramischen Bestandteilen weist einen ungünstigeren Reibwertverlauf 3 auf und es besteht bei Uberbelastungen die Gefahr von abrasiven Verschleißerscheinungen.

### Beispiel 2:

Es wurde ein Sinterreibwerkstoff mit folgenden Bestandteilen hergestellt:

| | |
|---|---|
| Matrix | 77 Volumenprozent |
| Graphit | 23 Volumenporzent |
| Molybdän | 1,5 Gewichtsprozent bezogen auf die Matrix. |

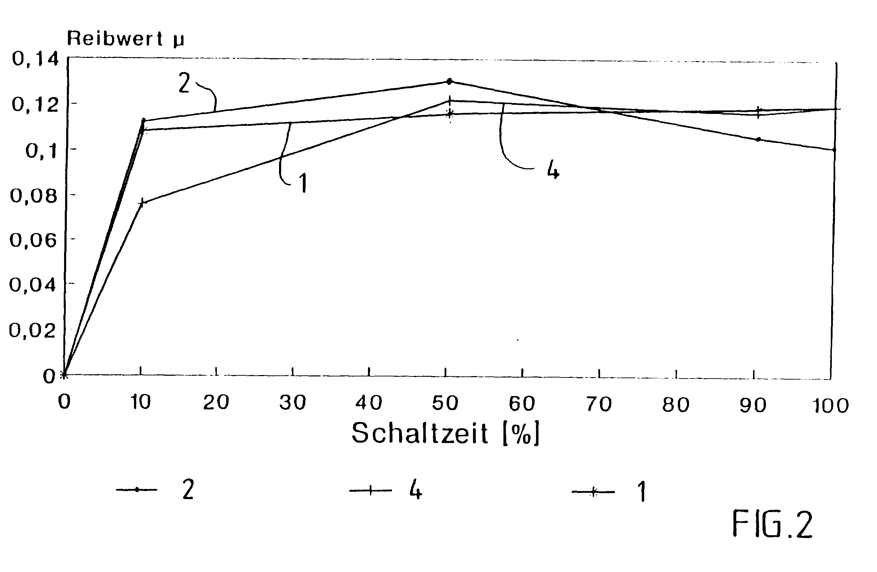

Das Reibverhalten dieses Reibwerkstoffes wurde ebenfalls bei einer Flächenpressung von 4 N/mm² und einer Reibgeschwindigkeit von 5 m/s getestet. Der Reibwertverlauf dieses Reibbelages ist in Fig. 2 mit dem Bezugszeichen 4 versehen. Zum Vergleich sind die Kurvenverläufe 1 und 2 für einen Reibwerkstoff gemäß Beispiel 1 bzw. für eine Molybdän-Spritzschicht ebenfalls dargestellt. Der Reibwerkstoff gemäß Beispiel 2 weist zu Beginn der Schaltzeit einen schlechteren Reibwert als der Reibwerkstoff gemäß Beispiel 1 auf. Dies ist darauf zurückzuführen, daß aufgrund des höheren Festschmierstoffgehaltes der Reibwerkstoff gemäß Beispiel 1 eine höhere Porösität aufweist und somit das auf der Oberfläche vorhandene Öl besser verdrängt wird. Am Ende der Schaltzeit weisen sowohl der Reibwerkstoff gemäß Beispiel 1 als auch der Reibwerkstoff gemäß Beispiel 2 nahezu identische Reibwerte auf. Auch bei diesem Reibwerkstoff werden aufgrund des hohen Festschmierstoffgehaltes abrasiver Verschleiß des Gegenläufers oder Adhäsionserscheinungen weitgehend vermieden.

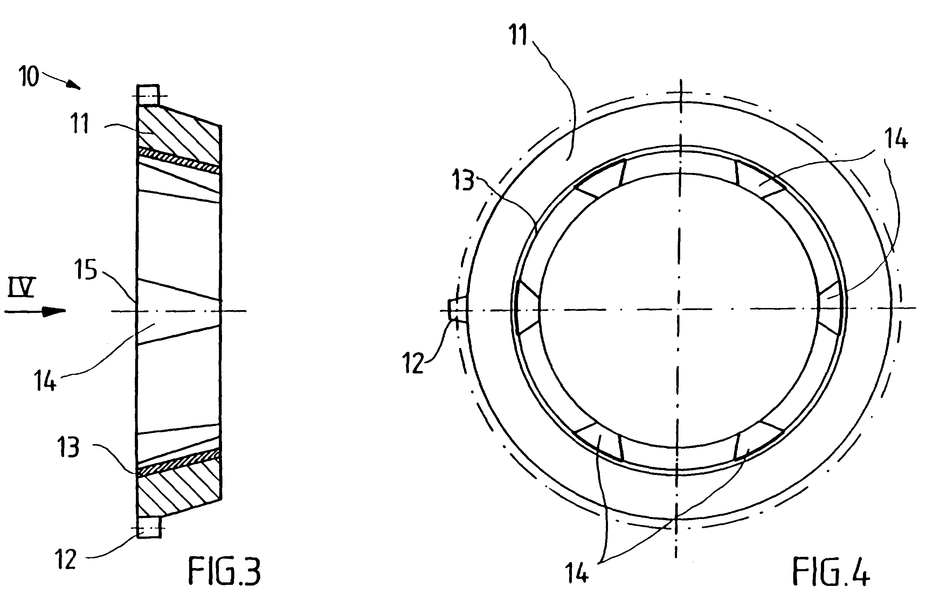

Der in den Fig. 3 und 4 dargestellte Synchronring 10 weist einen äußeren Tragring 11 mit einer Verzahnung 12 auf. Der Tragring 11 kann beispielsweise aus Sinterstahl gefertigt sein. Der dem Kupplungskörper zugeordnete Reibbelag 13 des Synchronringes besteht aus einem Sinterreibwerkstoff gemäß der eingangs geschilderten Art. Ein solcher Synchronring kann beispielsweise im Verbundverfahren herstellt werden.

Die Reibfläche ist bei einem solchen Synchronring 10 im allgemeinen konisch ausgebildet. Die Reibfläche weist bei der in der Zeichnung dargestellten Ausführungsform axial ausgerichtete Nuten 14 auf, die trapezförmig ausgebildet sind. Um die Herstellung der trapezförmigen Nuten beim Preßvorgang des Sintermetallpulvers durchführen zu können, ist das breitere Ende 15 der trapezförmigen Nut 14 dem größeren Durchmesser der konischen Reibfläche des Synchronringes 10 zugeordnet.

Durch die trapezförmige Ausbildung der Nuten 14 wird das Öl durch nicht senkrecht zur Drehrichtung verlaufende Kanten von der Reibfläche abgestreift, wodurch die Ölabfuhr begünstigt wird. Weiterhin wird durch die symmetrische Ausbildung der trapezförmigen Nuten 14 ein Einfluß der Drehrichtung auf das Reibverhalten und die Ölabfuhr vermieden.

## Patentansprüche

1. Sinterreibwerkstoff zum Herstellen reibschlüssiger Elemente, insbesondere Synchronringe, mit einer Matrix auf Eisenbasis und einem Festschmierstoff, wobei der Reibwerkstoff 0,5 - 10 Gewichtsprozent bezogen auf die Matrix Molybdän und 20 - 50 Volumenprozent Graphit als Festschmierstoff enthält.

2. Sinterreibwerkstoff nach Anspruch 1, dadurch gekennzeichnet, daß der Molybdängehalt bezogen auf die Matrix 1 - 5 Gewichtsprozent beträgt.

3. Sinterreibwerkstoff nach Anspruch 1 oder 2, dadurch gekennzeichnet, daß der Molybdängehalt bezogen auf die Matrix 1 - 2 Gewichtsprozent beträgt.

4. Sinterreibwerkstoff nach einem der Ansprüche 1 bis 3, dadurch gekennzeichnet, daß der Graphitgehalt 35 - 45 Volumenpozent beträgt.

5. Sinterreibwerkstoff nach einem der Ansprüche 1 bis 4, dadurch gekennzeichnet, daß die Matrix zumindest teilweise aus einem mit Molybdän fertiglegierten Eisenpulver besteht.

6. Sinterreibwerkstoff nach einem der Ansprüche 1 bis 5, dadurch gekennzeichnet, daß die Matrix zumindest teilweise aus einem mit Molybdän anlegierten Eisenpulver besteht.

7. Reibschlüssiges Element, insbesondere Synchronring (10), mit einem Träger (11) und einem Reibbelag aus einem Sinterreibwerkstoff gemäß einem der Ansprüche 1 bis 6.

8. Reibschlüssiges Element nach Anspruch 7, dadurch gekennzeichnet, daß auf der Reibfläche axial ausgerichtete Nuten (14) angeordnet sind.

9. Reibschlüssiges Element nach Anspruch 7 oder 8, dadurch gekennzeichnet, daß die Nuten (14) auf der Reibfläche (13) trapezförmig ausgebildet sind.

10. Reibschlüssiges Element nach einem der Ansprüche 7 bis 9, dadurch gekennzeichnet, daß der Träger (11) aus Sinterstahl besteht.

## Claims

1. A sintered friction material for the production of friction-fitting elements, in particular synchronous rings, with a matrix of iron base and with a solid lubricant, in which the friction material contains 0.5 - 10 per cent by weight molybdenum, in relation to the matrix, and 20 - 50 per cent by volume graphite as solid lubricant.

2. A sintered friction material according to Claim 1, characterised in that the molybdenum content in relation to the matrix amounts to 1 - 5 per cent by weight.

3. A sintered friction material according to Claim 1 or 2, characterised in that the molybdenum content in relation to the matrix amounts to 1 - 2 per cent by weight.

4. A sintered friction material according to one of Claims 1 to 3, characterised in that the graphite content amounts to 35 - 45 per cent by volume.

5. A sintered friction material according to one of Claims 1 to 4, characterised in that the matrix consists at least partially of an iron powder which is finish-alloyed with molybdenum.

6. A sintered friction material according to one of Claims 1 to 5, characterised in that the matrix consists at least partially of an iron powder which is alloyed on with molybdenum.

7. A friction-fitting element, in particular a synchronous ring (10), with a carrier (11) and with a friction lining of a sintered friction material according to one of Claims 1 to 6.

8. A friction-fitting element according to Claim 7, characterised in that axially aligned grooves (14) are arranged on the friction surface.

9. A friction-fitting element according to Claim 7 or 8, characterised in that the grooves (14) are constructed in a trapezoidal shape on the friction surface (13).

10. A friction-fitting element according to one of Claims 7 to 9, characterised in that the carrier (11) consists of sintered steel.

## Revendications

1. Matériau de friction fritté pour la fabrication d'éléments entraînés par friction, en particulier des bagues de synchronisation, muni d'une matrice à base de fer et d'un lubrifiant solide, dans lequel le matériau de friction contient 0,5 à 10 % en poids de molybdène et 20 à 50 % en volume de graphite comme lubrifiant solide, par rapport à la matrice.

2. Matériau de friction fritté selon la revendication 1, caractérisé en ce que la teneur en molybdène est de 1 à 5 % en poids par rapport à la matrice.

3. Matériau de friction fritté selon l'une des revendications 1 et 2, caractérisé en ce que la teneur en molybdène est de 1 à 2 % en poids par rapport à la matrice.

4. Matériau de friction fritté selon l'une des revendications 1 à 3, caractérisé en ce que la teneur en graphite est de 35 à 45 % en volume.

5. Matériau de friction fritté selon l'une des revendications 1 à 4, caractérisé en ce que la matrice est au moins constituée partiellement d'une poudre de fer complètement alliée au molybdène.

6. Matériau de friction fritté selon l'une quelconque des revendications 1 à 5, caractérisé en ce que la matrice est au moins partiellement constituée d'une poudre de fer alliée à du molybdène.

7. Elément entraîné par friction, en particulier une bague de synchronisation (10) avec un support (11) et une garniture de friction constituée d'un matériau de friction fritté selon l'une quelconque des revendications 1 à 6.

8. Elément entraîné par friction, selon la revendication 7 caractérisé en ce que des rainures dirigées axialement (14) sont pratiquées sur la surface de friction.

9. Elément entraîné par friction, selon l'une des revendications 7 ou 8, caractérisé en ce que les rainures (14) sur la surface de friction (13) ont une forme trapézoïdale.

10. Elément entraîné par friction, selon l'une des revendications 7 à 9 caractérisé en ce que le support (11) est constitué d'acier fritté.
